# DEMANDE DE BREVET EUROPEEN

(11) **EP 1 566 262 A1**
(43) Date de publication de la demande: **24.08.2005**
(21) Numéro de dépôt: 05101255.7
(22) Date de dépôt: 18.02.2005
(51) Int. Cl.: B32B 5/14, B60J 1/20, B29C 35/02

(54) **Procédé de fabrication d'un dispositif d'occultation pour véhicule automobile, dispositif d'occultation et véhicule correspondant**

(30) Priorité: 18.02.2004 FR 0401647
(71) Demandeur: WAGON SAS, 79302 Bressuire Cédex (FR)
(72) Inventeur: JOILVET, David, 79300, BRESSUIRE (FR)
(74) Mandataire: Bioret, Ludovic

(57) **Abrégé**

L'invention concerne un procédé de fabrication d'un rideau de store pour véhicule automobile, formé d'un empilement d'au moins trois couches (10,11,12).

Selon l'invention, au moins une des couches (11) est réalisée dans un matériau durcissant sous l'effet d'une contrainte prédéterminée, et le procédé de fabrication comprend une étape d'application sélective de la contrainte, de façon que le rideau présente des zones (11a,11b) de rigidité différentes.

## Description

Le domaine de l'invention est celui des véhicules automobiles, et en particulier des dispositifs d'occultation de surfaces vitrées importantes de ces véhicules, par exemple au niveau du pavillon. Plus précisément, l'invention concerne la fabrication de tels dispositifs d'occultation, notamment pour se protéger des rayons du soleil.

La tendance actuelle, en matière de véhicule automobile, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil.

On a également proposé des surfaces vitrées multiples, par exemple sous la force de deux ou trois éléments, dont certains peuvent former toits ouvrants. De la même façon, des surfaces vitrées importantes peuvent être prévues sur d'autres parties du véhicule, et par exemple à l'arrière, notamment lorsque le véhicule est équipé d'un hayon.

On comprend qu'il est alors nécessaire de prévoir des moyens d'occultation, pour protéger l'habitacle et ses occupants du soleil. Lorsque le pavillon est équipé d'un toit ouvrant, on a pensé à l'équiper d'un volet rigide, pouvant coulisser dans le pavillon. Cette solution pourrait éventuellement être étendue au cas où plusieurs zones vitrées existent, sous réserve qu'il reste suffisamment d'espace dans le pavillon pour dissimuler les volets lorsque ceux-ci ne sont pas utilisés pour occulter la surface vitrée correspondante. Clairement, en revanche, une telle solution ne peut pas être envisagée lorsque le pavillon est intégralement, ou essentiellement, vitré.

Pour les surfaces vitrées réduites, et verticales ou sensiblement verticales, telles que les vitres arrières ou latérales du véhicule, on connaît également les stores à enrouleur, que l'on peut déployer pour se protéger du soleil. Il n'est malheureusement pas possible de transposer cette technique du store à enrouleur, et plus généralement de tous types de toiles d'occultation, à une surface de grande taille, non verticale, et qui plus est généralement non plane, tels que le sont par exemple les pavillons de véhicules actuels ou futurs.

En effet, si l'on développait horizontalement un store dont les dimensions pourraient être approximativement de 1,5 m en longueur, et de 1m en largeur, pour occulter un pavillon vitré, la toile "pocherait", c'est-à-dire que ses bords latéraux se rapprocheraient légèrement l'un de l'autre, ce qui provoquerait un creux au centre de la toile, des plis ou des froncements, et/ou baillerait, sous l'effet de la gravité. Cela serait bien sûr inacceptable, tant en ce qui concerne le simple aspect visuel et ergonomique que pour l'efficacité de l'occultation, la lumière pouvant alors passer le long des bords.

En outre, les pavillons des véhicules sont le plus souvent non plats mais au contraire incurvés ou galbés, au moins dans le sens de la largeur et également parfois dans le sens de la longueur. À nouveau, le simple déploiement d'une toile d'occultation ne serait alors ni efficace, ni ergonomique, ni esthétique.

Une technique connue de l'art antérieur propose l'utilisation de baleines en plastique ou en métal qui maintiennent la toile d'occultation dans la position déployée souhaitée. Selon une technique connue, la fabrication de tels dispositifs d'occultation prévoit la réalisation de fourreaux sur la toile d'occultation dans lesquels sont logées les baleines. Chacun de ces fourreaux est constitué par une pièce de tissu rapportée sur la toile et solidarisée par exemple par soudure à celle-ci. Les baleines sont ensuite glissées à l'intérieur des fourreaux.

Un des inconvénients de cette technique pour la fabrication de tels dispositifs d'occultation réside dans le fait que sa mise en oeuvre est longue et coûteuse en termes de matériau et de main d'oeuvre.

Un autre inconvénient de cette technique est qu'elle conduit à limiter le nombre de baleines utilisées pour assurer le maintien du dispositif en position déployée. En effet, ce procédé de fabrication est d'autant plus coûteux et long à mettre en oeuvre que le nombre de baleines utilisées est important, ce qui impose de chercher un compromis entre le coût de fabrication et le nombre de baleines.

Encore un autre inconvénient de cette technique réside dans son caractère inesthétique. En effet, dans le cas où la pièce de tissu rapportée pour réaliser les fourreaux est solidarisée par soudure, les lignes de soudures peuvent être visibles du côté visible du dispositif dans l'habitacle du véhicule.

L'invention a notamment pour objectif de pallier ces différents inconvénients de l'état de l'art.

Plus précisément, l'invention a pour objectif de fournir un procédé de fabrication d'un dispositif d'occultation pour véhicule automobile, et par exemple pour le pavillon de ce dernier (ou plus généralement sur toute surface importante), qui soit simple et peu coûteux à mettre en oeuvre.

Un autre objectif de l'invention est de fournir un procédé de fabrication d'un dispositif d'occultation qui puisse comprendre un nombre important de baleines, sans que le temps de mise en oeuvre soit augmenté, ni que le coût de mise en oeuvre du procédé soit trop élevé.

Un autre objectif de l'invention est de fournir un tel dispositif d'occultation qui soit efficace et qui présente un aspect visuel de bonne qualité, lorsqu'il est déployé.

Ces objectifs, ainsi que d'autres qui apparaîtront par la suite, sont atteints à l'aide d'un procédé de fabrication d'un rideau de store pour véhicule automobile, formé d'un empilement d'au moins trois couches.

Selon l'invention, au moins une desdites couches est réalisée dans un matériau durcissant sous l'effet d'une contrainte prédéterminée, et le procédé de fabrication comprend une étape d'application sélective de ladite contrainte, de façon que ledit rideau présente des zones de rigidité différentes.

Ainsi, l'invention repose sur une approche tout à fait nouvelle et inventive consistant à réaliser un rideau de store présentant des zones de rigidité différentes en appliquant une contrainte prédéterminée sur l'empilement des différentes couches et notamment sur le matériau durcissant, au cours de son procédé de fabrication.

Le procédé de fabrication d'un tel rideau de store est simple et peu coûteux à mettre en oeuvre, notamment en termes de temps de fabrication, de matériau et de main d'oeuvre. Ce procédé permet l'obtention d'un rideau de store efficace qui se maintienne dans une forme prédéterminée dans sa position déployée.

L'invention permet ainsi d'obtenir une solution particulièrement adaptée à la réalisation de rideaux de store pour l'occultation de surfaces de grandes dimensions d'un véhicule automobile. Il peut notamment s'agir d'un pavillon intégralement ou en grande partie vitré, ou de la vitre arrière du véhicule. Le dispositif proposé par l'invention peut également servir de cache-bagages par exemple.

De façon préférée, l'application de la contrainte se fait en même temps qu'une étape d'assemblage des différentes couches que comprend le dispositif.

De façon avantageuse, ces étapes mettent en oeuvre au moins un rouleau rotatif, compressif, et permettant l'application de ladite contrainte.

Le procédé de fabrication est alors d'autant plus simple et rapide à mettre en oeuvre.

Selon un premier mode de réalisation, le matériau durcissant est un matériau thermodurcissant, comme par exemple un maillage de fibres « thermodur ».

De façon avantageuse, le rouleau rotatif permettant l'application de ladite contrainte comprend des moyens de chauffage. Celui-ci peut alors comprendre une ou plusieurs zones chauffantes sur sa circonférence.

De façon préférée, le rouleau comprend des zones chauffantes longitudinales. Celles-ci peuvent s'étendre perpendiculairement ou parallèlement à la largeur des couches empilées.

Ainsi, lorsqu'un rouleau présentant, perpendiculairement à la largeur des couches empilées, plusieurs zones chauffantes longitudinales séparées par des zones longitudinales non chauffantes sur sa circonférence, le procédé mis en oeuvre permet la fabrication de rideaux de store présentant une alternance de zones de rigidité différentes.

Les zones les plus rigides ont alors une fonction similaire à celle de baleines, et assurent un maintien efficace du rideau de store en position déployée. La technique selon l'invention permet notamment l'obtention d'un grand nombre de zones rigides tout en conservant un faible coût de mise en oeuvre et de montage.

Selon un mode avantageux, la durée du contact des zones chauffantes du rouleau avec les couches empilées, et notamment avec le matériau thermodurcissant pourra être modulée en prévoyant par exemple des plages d'arrêt dans la rotation du rouleau lors du contact des zones chauffantes.

D'autres variantes pourront évidemment être envisagées pour moduler la durée et l'intensité avec laquelle la contrainte est appliquée, de façon à obtenir la rigidité souhaitée pour différentes zones du matériau durcissant afin d'obtenir un rideau d' occultation efficace pouvant se maintenir dans un position déterminée lorsqu'il est déployé.

De façon avantageuse, l'application de ladite contrainte pourra permettre l'obtention d'un galbe particulier, par exemple au moyen d'un rouleau chauffant présentant un renflement. Ainsi les zones de rigidité supérieure sur lesquelles la contrainte prédéterminée a été appliquée présenteront un galbe particulier, de façon que le rideau de store ainsi réalisé puisse être adapté par exemple pour l'occultation d'un pavillon présentant un galbe particulier, non plan.

Selon un second mode de réalisation, ladite contrainte prédéterminée permettant le durcissement du matériau thermodurcissant est une contrainte en pression.

Préférentiellement, au moins une desdites couches est une couche opacifiante et le matériau choisi pour sa réalisation pourra être le polyuréthanne.

De façon avantageuse, une desdites couches pourra être assortie au revêtement intérieur du véhicule auquel est destiné le rideau de store.

Préférentiellement, cette couche pourra être réalisée dans un matériau tissé gratté, tel que du Jersey (marque déposée).

L'invention concerne d'une façon générale les rideaux de store fabriqués par un tel procédé de fabrication, les dispositifs comprenant au moins un de ces rideaux de store, ainsi que les véhicules automobiles équipés par un ou plusieurs dispositifs de ce type.

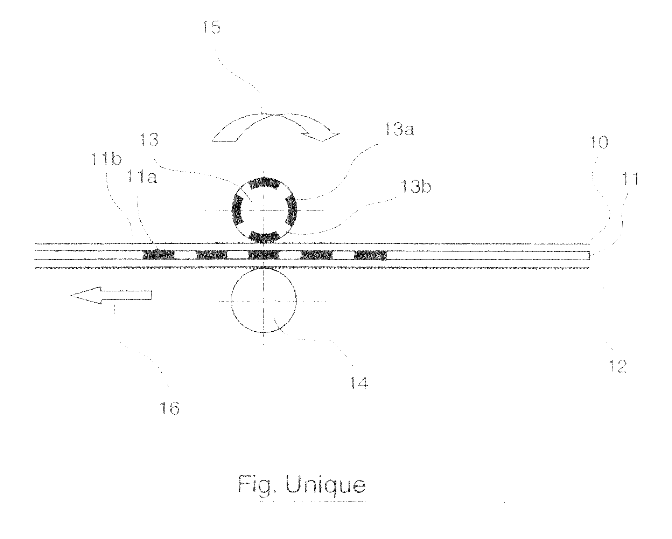

D'autres caractéristiques et avantages de l'invention apparaîtront plus clairement à la lecture de la description suivante de plusieurs modes de réalisation préférentiels, donnés à titre de simples exemples illustratifs et non limitatifs, et de la figure unique illustrant , selon une coupe transversale, un mode de réalisation du procédé de fabrication d'un rideau de store.

Selon ce mode de réalisation, le procédé comprend une étape de chauffage de l'empilement des différentes couches comprenant une couche de matériau thermodurcissable.

Le principe général de l'invention repose donc sur la mise en oeuvre d'un procédé de fabrication d'un rideau de store pour véhicule automobile formé de plusieurs couches, dont au moins l'une d'entre elles est réalisée dans un matériau durcissable ou durcissant sous l'application d'une contrainte (chauffage ou pression par exemple), ce procédé mettant en oeuvre une étape d'application de cette contrainte de façon à obtenir un rideau de store présentant des zones de rigidité différentes.

Un tel procédé est simple, rapide et peu coûteux à mettre en oeuvre. Le rideau de store ainsi fabriqué peut être utilisé dans un dispositif d'occultation destiné à occulter une surface importante d'un véhicule. Il peut notamment s'agir d'un pavillon intégralement ou en grande partie vitré. Le dispositif peut également être utilisé pour une vitre arrière de véhicule, un cache-bagages, etc.

En référence à la figure unique, un mode de réalisation de l'invention comprend trois couches empilées dont une couche opacifiante 10, une couche 12 assortie au revêtement intérieur du véhicule auquel est destiné le rideau de store, et une couche de matériau thermodurcissable 11.

La flèche 15 indique le sens de rotation d'un rouleau 13. Le rouleau 14 est un rouleau fou dont la rotation est provoquée par la progression, sous l'effet du rouleau 13, des couches empilées dans le sens indiqué par la flèche 16.

Le rouleau 13 présente des zones longitudinales non chauffantes 13b et des zones longitudinales chauffantes 13a. Lors de la rotation de ce rouleau 13, ces zones sont successivement en contact avec les couches empilées. Le contact avec les zones chauffantes 13a provoque le durcissement du matériau thermodurcissable 11. La couche intermédiaire de matériau thermodurcissable 11 présente ainsi des zones plus rigides 11a ayant été en contact avec les zones 13a et des zones 11b de rigidité inchangées.

Le matériau thermodurcissable peut être par exemple un maillage de fibre thermodur.

Le procédé de fabrication selon l'invention permet ainsi l'obtention d'un rideau de store présentant des zones de rigidité différentes, et dont les zones 11a, plus rigides, jouent un rôle similaire à celui de baleines et assurent le maintien du rideau dans une forme prédéterminée lorsqu'il est déployé.

La durée du contact des zones chauffantes 13a du rouleau 13 avec les différentes couches peut être modulée notamment par la vitesse de rotation plus ou moins lente du rouleau 13, ou encore par une rotation présentant des temps d'arrêt lorsque les zones chauffantes 13a sont au contact des couches, de façon que les zones 11a du matériau thermodurcissable acquièrent la rigidité souhaitée.

Selon ce mode de réalisation, la largeur des zones chauffantes 13a et leur répartition sur la circonférence du rouleau 13 peuvent être variables en fonction de la largeur, de l'espacement et du nombre de baleines souhaités, de façon à obtenir un rideau de store présentant le meilleur maintien possible en position déployée, tout en pouvant être replié sur un faible diamètre lorsqu'il est monté par exemple sur un tube enrouleur.

Selon un autre mode de réalisation de l'invention, l'étape de rigidification du matériau peut être mise en oeuvre au moyen d'un rouleau dont la température est uniforme sur toute sa circonférence mais chauffant de façon intermittente.

L'invention permet notamment de fabriquer un rideau de store présentant un grand nombre de zones rigides 10a, assimilables à des baleines, de largeur faible et peu espacées les unes des autres tout en conservant un faible coût de mise en oeuvre du procédé de fabrication.

Typiquement, les rideaux de stores fabriqués selon l'invention pourront présenter pour l'occultation intégrale d'un pavillon de 1,5 m de longueur sur 1 m de largeur, un nombre de zones rigides 11a total compris entre 10 et 20, celles-ci présentant une largeur de 3 à 10 mm et étant espacées les unes des autres de 10 à 50 mm.

Selon ce mode de réalisation, la couche opacifiante 10 peut par exemple être une couche de polyuréthanne, et la couche 12 assortie au revêtement intérieur du véhicule peut être un matériau tissé gratté, tel que le Jersey (marque déposée).

L'invention permet par ailleurs l'obtention d'un rideau de store ne présentant notamment pas de marques de soudure dues au report de pièces de tissu comme dans la technique de l'art antérieur.

Un autre mode de réalisation de l'invention peut se faire à partir d'un matériau durcissable sous une contrainte en pression. Dans ce cas, l'étape d'application de la contrainte en pression sur l'empilement des différentes couches pourra être mise en oeuvre de différentes façons, par exemple au moyen d'un rouleau rotatif monté sur un axe mobile transversalement, la position de l'axe permettant d'appliquer une pression plus ou moins importante.

D'autres variantes peuvent également être envisagées selon ce mode de réalisation comme par exemple un rouleau présentant un rayon variable sur différentes zones de sa circonférence, des zones longitudinales par exemple, ou encore, un rouleau rotatif de rayon uniforme avec, remplaçant le rouleau fou 14, un support horizontal présentant une surface crénelée.

Encore un autre mode de réalisation de l'invention peut envisager lors de l'étape d'application de la contrainte l'obtention d'un galbe particulier, non plan, des zones plus rigides, et en conséquence de l'ensemble du rideau de store pour que celui-ci puisse, par exemple lorsqu'il est destiné à occulter un pavillon de véhicule, s'adapter à la courbe de celui-ci. Dans ce cas, un moyen adapté au galbe souhaité sera utilisé pour mettre en oeuvre l'application de la contrainte, comme par exemple un rouleau présentant un renflement.

Dans les différents modes de réalisation décrits, le procédé peut comprendre une étape d'assemblage et/ou solidarisation des différentes couches pouvant précéder l'étape d'application de la contrainte ou être mise en oeuvre simultanément au moyen par exemple d'un même rouleau rotatif, compressif et permettant d'appliquer la contrainte prédéterminée pour la rigidification du matériau durcissable.

D'une façon générale, dans les différents modes de réalisation décrits, des couches supplémentaires pourront être envisagées, comme par exemple une couche de rigidification pouvant former une grille ou encore une couche formant un film réfléchissant sur la face tournée vers l'extérieur, en aluminium ou en un matériau similaire dans le cas de l'occultation d'un pavillon de véhicule par le store d'occultation.

L'invention concerne d'une façon générale les rideaux de store fabriqués par un tel procédé de fabrication, les dispositifs comprenant au moins un de ces rideaux de store, ainsi que les véhicules automobiles équipés par un ou plusieurs dispositifs de ce type.

## Revendications

1. Procédé de fabrication d'un rideau de store pour véhicule automobile, formé d'un empilement d'au moins trois couches,
**caractérisé en ce qu'**au moins une desdites couches est réalisée dans un matériau durcissant sous l'effet d'une contrainte prédéterminée,
et **en ce qu'**il comprend une étape d'application sélective de ladite contrainte, de façon que ledit rideau présente des zones de rigidité différentes.

2. Procédé de fabrication selon la revendication 1, **caractérisé en ce que** ladite étape d'application sélective de ladite contrainte se fait en même temps qu'une étape d'assemblage desdites couches.

3. Procédé de fabrication selon l'une quelconque de revendications 1 et 2, **caractérisé en ce que** lesdites étapes d'assemblage et d'application sélective de ladite contrainte mettent en oeuvre au moins un rouleau rotatif, compressif et permettant l'application de ladite contrainte.

4. Procédé de fabrication selon l'une quelconque des revendications 1 à 3, **caractérisé en ce que** ledit matériau est un matériau thermodurcissant.

5. Procédé de fabrication selon l'une quelconque de revendications 3 et 4, **caractérisé en ce qu'**un desdits rouleaux comprend des moyens de chauffage.

6. Procédé de fabrication selon la revendication 5, **caractérisé en ce que** le dit rouleau rotatif comprend une ou plusieurs zones chauffantes sur sa circonférence.

7. Procédé de fabrication selon la revendication 6, **caractérisé en ce que** la ou lesdites zones chauffantes sont longitudinales.

8. Procédé de fabrication selon la revendication 7, **caractérisé en ce que** la ou lesdites zones chauffantes longitudinales s'étendent perpendiculairement et/ou parallèlement à la largeur desdites couches assemblées.

9. Procédé de fabrication selon l'une quelconque des revendications 6 à 8, **caractérisé en ce que** la rotation dudit rouleau chauffant présente des plages d'arrêts de durée préterminée lorsque lesdites zones chauffantes sont en contact avec lesdites couches assemblées.

10. Procédé de fabrication selon la revendication 4, **caractérisé en ce que** ledit matériau thermodurcissant est un maillage de fibre « thermodur ».

11. Procédé de fabrication selon l'une quelconque des revendications 1 à 10, **caractérisé en ce que** ladite étape d'application sélective de ladite contrainte assure l'obtention d'un galbe prédéterminé.

12. Procédé de fabrication selon l'une quelconque des revendications 1 à 11, **caractérisé en ce que** ladite contrainte est la pression.

13. Procédé de fabrication selon l'une quelconque des revendications 1 à 12, **caractérisé en ce qu'**au moins une desdites couches est une couche opacifiante.

14. Procédé de fabrication selon la revendication 13, **caractérisé en ce que** ladite couche opacifiante est réalisée en polyuréthanne.

15. Procédé de fabrication selon l'une quelconque des revendications 1 à 14, **caractérisé en ce qu'**au moins une desdites couches est une couche assortie au revêtement intérieur du véhicule.

16. Procédé de fabrication selon la revendication 15, **caractérisé en ce que** ladite couche assortie au revêtement intérieur du véhicule est un matériau tissé gratté, tel que du Jersey (marque déposée).

17. Procédé de fabrication selon l'une quelconque des revendications 1 à 16, **caractérisé en ce qu'**il comprend au moins une couche intermédiaire de rigidification entre une couche opacifiante et une couche assortie au revêtement intérieur du véhicule.

18. Rideau de store pour véhicule automobile **caractérisé en ce qu'**il est formé d'un empilement d'au moins trois couches, **en ce qu'**au moins une desdites couches est réalisée dans un matériau durcissant sous l'effet d'une contrainte prédéterminée, et **en ce qu'**il est fabriqué par un procédé comprenant une étape d'application sélective de ladite contrainte, de façon que ledit rideau présente des zones de rigidité différentes.

19. Dispositif d'occultation pour véhicule automobile **caractérisé en ce qu'**il comprend un rideau de store formé d'un empilement d'au moins trois couches, au moins une desdites couches étant réalisée dans un matériau durcissant sous l'effet d'une contrainte prédéterminée, et ledit rideau de store étant fabriqué par un procédé comprenant une étape d'application sélective de ladite contrainte, de façon que ledit rideau présente des zones de rigidité différentes.

20. Dispositif d'occultation selon la revendication 19, **caractérisé en ce qu'**il est destiné à occulter un pavillon ou une partie d'un pavillon.

21. Véhicule automobile, **caractérisé en ce qu'**il comprend au moins un dispositif d'occultation comprenant un rideau de store formé d'un empilement d'au moins trois couches, au moins une desdites couches étant réalisée dans un matériau durcissant sous l'effet d'une contrainte prédéterminée, et ledit rideau de store étant fabriqué par un procédé comprenant une étape d'application sélective de ladite contrainte, de façon que ledit rideau présente des zones de rigidité différentes.

22. Véhicule automobile selon la revendication 21, **caractérisé en ce que** ledit dispositif d'occultation s'étend au moins partiellement en regard du pavillon.
